# EUROPÄISCHE PATENTSCHRIFT

(11) **EP 0 664 318 B1**
(45) Veröffentlichungstag und Bekanntmachung des Hinweises auf die Patenterteilung: **06.08.1997**
(21) Anmeldenummer: 94120843.1
(22) Anmeldetag: 28.12.1994
(51) Int. Cl.: C08L 9/00, C08K 3/36, B60C 1/00

(54) **Kautschukmischung, daraus hergestellte Reifenlauffläche und Reifen mit dieser Reifenlauffläche**
Rubber composition, tread made therefrom and tyres containing these treads
Composition de caoutchouc, bande de roulement fabriquée à partir de celle-ci et pneumatiques avec ces bandes de roulement

(30) Priorität: 24.01.1994 DE 4401935
(43) Veröffentlichungstag der Anmeldung: 26.07.1995
(73) Patentinhaber: SP REIFENWERKE GMBH, 63450 Hanau (DE)
(72) Erfinder: Fuchs, Hans-Bernd, Dr., D-63755 Alzenau-Hörstein (DE); Dietrich, Günther, D-60431 Frankfurt am Main (DE); Steinbrecht, Ulrich, Dr., D-64372 Ober-Ramstadt (DE)
(74) Vertreter: Dipl.-Phys.Dr. Manitz Dipl.-Ing. Finsterwald Dipl.-Ing. Grämkow Dipl.-Chem.Dr. Heyn Dipl.-Phys. Rotermund Morgan B.Sc.(Phys.)

(56) Entgegenhaltungen:
- EP-A- 0 524 339
- EP-A- 0 620 250
- EP-A- 0 638 610

## Beschreibung

Die vorliegende Erfindung betrifft eine mit Schwefel vulkanisierbare Kautschukmischung, die mindestens ein Elastomer, mindestens einen Füllstoff, übliche Zusätze sowie ein Vulkanisationssystem enthält. Ferner betrifft die Erfindung Reifenlaufflächen, die diese Kautschukmischung enthalten, sowie Reifen mit einer Reifenlauffläche, die die vulkanisierte Kautschukmischung enthält.

Die bei Reifen gewünschten Eigenschaften sind nur schwer gleichzeitig zu erreichen, da sie teilweise einander widersprechen. So bewirken Maßnahmen, die zu einer Verringerung des Rollwiderstands führen, eine Abnahme der Abriebfestigkeit. Der teilweise oder völlige Ersatz von Ruß durch den Füllstoff Kieselsäure z.B. verringert zwar den Rollwiderstand des Reifens, verschlechtert aber dessen Abriebfestigkeit. In der EP 0 299 074 B1 wird zur Vermeidung dieser Verschlechterung vorgeschlagen, für Kautschukmischungen, die Kieselsäure als Füllstoff in großen Anteilen enthalten, Polymere zu verwenden, die mit einer speziellen Silanverbindung modifiziert sind. Diese Maßnahme ist wegen der Verwendung spezieller Silanverbindungen für eine industrielle Anwendung ungünstig.

Um diesen Nachteil zu vermeiden, wird in der EP 0 501 227 A1 eine Kautschukmischung vorgeschlagen, die ein durch Lösungspolymerisation in einem Kohlenwasserstofflösemittel hergestelltes Copolymer aus konjugiertem Dien und vinylaromatischer Verbindung, eine ganz spezielle Kieselsäure, die z.B. nach dem in der EP 0 157 703 B1 beschriebenen Verfahren hergestellt ist, üblicherweise verwendete Zusätze sowie ein Vulkanisationssystem enthält. Diese Kautschukmischung wird in bekannter Weise durch stufenweises Vermischen der Bestandteile hergestellt, wobei Temperaturen eingehalten werden, bei denen noch keine Vernetzung eintritt. Der Kautschukmischung kann als Verschnitt mindestens ein weiteres Dienelastomer zugesetzt werden, wie z.B. l'olyisopren, Naturkautschuk oder Polybutadien.

In den Beispielen und Vergleichsbeispielen dieser Druckschrift werden Reirenlaufflächen miteinander verglichen, die aus Kautschukmischungen hergestellt wurden, die durch Emulsionspolymerisation herstelltes Styrol-Butadien-Copolymer (im folgenden Emulsions-SBR) und spezielle Kieselsäure oder klassische Kieselsäure oder Ruß als Füllstoff enthalten oder die durch Lösungspolymerisation hergestelltes Styrol-Butadien-Copolymer (im folgenden Lösungs-SBR) und spezielle Kieselsäure oder Ruß als Füllstoff enthalten. Aus den angegebenen Ergebnissen ist zu entnehmen, daß Laufflächen mit Emulsions-SBR und Ruß eine gute Lebensdauer unter Abrieb, aber einen schlechten Rollwiderstand haben, daß Laufflächen mit Emulsions-SBR und klassischer Kieselsäure schlechte Lebensdauer unter Abrieb, aber dafür einen guten Rollwiderstand haben und daß die in der EP 0 501 227 A1 beanspruchten Laufflächen, d.h. Laufflächen mit Lösungs-SBR und spezieller Kieselsäure sowohl beim Rollwiderstand als auch bei der Lebensdauer unter Abrieb gute Ergebnisse liefern.

In der nicht vorveröffentlichten EP-A-0 620 250 werden Kautschukmischungen beschrieben, die 10 bis 80 Gewichtsteile Emulsions-Styrol-Butadien-Copolymer, 10 bis 60 Gewichtsteile Isopren-Butadien-Copolymer, 15 bis 30 Gewichtsteile cis 1,4-Polybutadien, 0 bis 15 Gewichtsteile cis 1,4-Polyisopren und 50 bis 100 Gewichtsteile Kieselsäure enthalten. Angaben über die Mikrostruktur des Isopren-Butadien-Copolymers werden nicht gemacht. Dasselbe gilt für die nicht vorveröffentlichte EP-A-0 638 610. Darin werden Kautschukmischungen aus 15 bis 50 Gewichtsteilen Isopren-Butadien-Copolymer, 10 bis 40 Gewichtsteilen 3,4-Polyisopren, 10 bis 30 Gewichtsteilen cis 1,4-Polybutadien, 0 bis 30 Gewichtsteilen cis 1,4-Polyisopren Naturkautschuk und 50 bis 110 Gewichtsteilen Kieselsäure beschrieben.

Aus der EP-A-0 524 339 sind Kautschukmischungen bekannt, die 5 bis 35 Gewichtsteile 3,4-Polyisopren, 20 bis 60 Gewichtsteile cis 1,4-Polyisopren und 10 bis 50 Gewichtsteile wenigstens eines Elastomers aus einer Gruppe von Elastomeren, in der auch Isopren-Butadien-Copolymer genannt ist, enthält. Als Füllstoff wird Kieselsäure genannt, die in Mengen von 5 bis 25 Gewichtsteilen eingesetzt werden kann.

Aufgabe der Erfindung ist die Bereitstellung von Kautschukmischungen, die in Reifenlaufflächen auch bereits mit klassischer Kieselsäure zu guten Ergebnissen bei der Abriebfestigkeit und dem Rollwiderstand führen.

Ausgehend von der eingangs genannten mit Schwefel vulkanisierbaren Kautschukmischung wird diese Aufgabe dadurch gelöst, daß die Kautschukmischung 30 bis 100 Gewichtsteile Isopren-Butadien-Copolymer, 0 bis 70 Gewichtsteile eines oder mehrerer weiterer Elastomere sowie 20 bis 90 Gewichtsteile Kieselsäure als Füllstoff enthält, wobei alle Gewichtsteile auf 100 Gewichtsteile Gesamtelastomere bezogen sind und daß das Butadien des Copolymers einen 1,2-Bindungsgehalt von 10 bis 70 Gew.-% und das Isopren des Copolymers einen 3,4-Bindungsgehalt von 20 bis 70 Gew.-% aufweist.

Gegenstand der Erfindung sind ferner Reifenlaufflächen, die diese Kautschukmischung enthalten sowie Reifen die solche mit Schwefel vulkanisierte Laufflächen aufweisen.

Überraschenderweise wurde gefunden, daß Kautschukmischungen mit dieser Zusammensetzung zu einer vergleichbaren Abriebfestigkeit wie die entsprechenden Kautschukmischungen, die nur Ruß als Füllstoff enthalten, führen, aber einen deutlich niedrigeren tan δ (Verlustfaktor) aufweisen als die entsprechenden Kautschukmischungen mit Ruß als Füllstoff. Ein niedriger tan δ korreliert mit einem niedrigen Rollwiderstand. Wie den Versuchsergebnissen der EP 0 501 227 A1 zu entnehmen ist, wird der durch den Ersatz von Ruß durch klassische Kieselsäure erzielte verbesserte Rollwiderstand durch eine deutliche Verschlechterung der Abriebfestigkeit erkauft, sofern die Kautschukmischungen Emulsions-SBR oder Lösungs-SBR als Elastomer enthalten. Erfindungsgemäß wird eine Verschlechterung der Abriebfestigkeit selbst bei Verwendung von klassischer Kieselsäure vermieden, indem die Kautschukmischung 30 bis 100 Gewichtsteile Isopren-Butadien-Copolymer enthält, bezogen auf 100 Gewichtsteile Gesamtelastomere.

Die erfindungsgemäße Kautschukmischung kann zur Herstellung von Reifenlaufflächen verwendet werden, die für Reifen von Personenkraftwagen, Motorrädern, 4 x 4 Geländefahrzeugen, Transportern und Leicht-Lastkraftwagen geeignet sind.

Vorzugsweise enthält die Kautschukmischung 50 bis 100 Gewichtsteile Isopren-Butadien-Copolymer, bezogen auf 100 Gewichtsteile Gesamtelastomere, und besonders bevorzugt 70 bis 100 Gewichtsteile.

Das Isopren-Butadien-Copolymer -Copolymer hat vorzugsweise eine Glasübergangstemperatur (Tg) im Bereich von -90°C bis + 20°C bestimmt nach der Torsionspendel-Methode.

Das Isopren-Butadien-Copolymer besteht vorzugsweise aus 30 bis 90 Gew.-% Butadien und dem komplementären Teil Isopren und besonders bevorzugt aus 60 bis 80 Gew.-% Butadien und dem komplementären Teil Isopren.

Das Butadien hat im Copolymer einen 1,2-Bindungsanteil von 10 bis 70 Gew.-% und das Isopren einen 3,4-Bindungsanteil von 20 bis 70 Gew.-%. Der komplementäre Prozentsatz ist beim Isopren und Butadien jeweils der 1,4-Bindungsanteil.

Als weitere Elastomere können die erfindungsgemäßen Kautschukmischungen vorzugsweise 0 bis 50 Gewichtsteile Naturkautschuk, 0 bis 50 Gewichtsteile durch Emulsionspolymerisation hergestelltes Copolymer aus konjugiertem Dien und vinylaromatischer Verbindung und/oder 0 bis 30 Gewichtsteile Polybutadien enthalten, wobei alle Gewichtsteile jeweils auf 100 Gewichtsteile Gesamtelastomere bezogen sind. Der Gesamtgehalt dieser weiteren Elastomere in den erfindungsgemäßen Kautschukmischung kann 0 bis 70 Gewichtsteile, bezogen auf 100 Gewichtsteile Gesamtelastomer, betragen. Als konjugiertes Dien des durch Emulsionspolymerisation hergestellten Copolymers sind 1,3-Butadien, Isopren und 2,3-Dimethyl-1,3-butadien geeignet. Als vinylaromatische Verbindung des Copolymers sind Styrol und o-, m-, und p-Methylstyrol geeignet. Bevorzugt ist das Copolymer Styrol-Butadien-Copolymer mit einer Glasübergangstemperatur zwischen -20°C und -70°C, bestimmt nach der Torsionspendel-Methode. Als Polybutadiene werden vorzugsweise Polybutadiene mit hohem 1,4-cis-Bindungsgehalt, insbesondere über 90 %, eingesetzt.

Die Elastomere können in Form ölverstreckter Polymere eingesetzt werden. In der Regel kann der Gesamtölgehalt der Kautschukmischung,d.h. freies Öl und Ölgehalt der Elastomere, im Bereich von 10 bis 50 Gewichtsteile je 100 Gewichtsteile Gesamtelastomere liegen.

Als Füllstoff enthält die erfindungsgemäße Kautschukmischung Kieselsäure in einer Menge von 20 bis 90 Gewichtsteile je 100 Gewichtsteile Gesamtelastomergehalt. Als Kieselsäure kann sowohl "klassische" Kieselsäure als auch Kieselsäure mit einer optimierten Dispergierbarkeit in der Kautschukmischung verwendet werden. Unter "klassischer" Kieselsäure ist Kieselsäure zu verstehen, wie sie üblicherweise zur Reifenherstellung verwendet wird und als Handelsprodukte von verschiedenen Herstellern angeboten wird. Üblicherweise haben diese Kieselsäuren eine BET-Oberfläche zwischen 100 und 250 m²/g nach DIN 66 131, ISO 5794/1 Annex D, eine CTAB-Oberfläche zwischen 100 und 250 m²/g nach ISO 6810, ASTM D-3765 und eine mit DBP gemessene Ölaufnahme zwischen 150 und 250 ml/100g nach ISO S-4656, ASTM D-2414, DIN 53601. Als Kieselsäure mit einer optimierten Dispergierbarkeit kann zum Beispiel Kieselsäure verwendet werden, wie sie in der EP-0 157 703 B1 beschrieben ist.

Vorzugsweise enthält die Kautschukmischung 50 bis 80 Gewichtsteile Kieselsäure je 100 Gewichtsteil Gesamtelastomere.

Als weiteren Füllstoff kann die erfindungsgemäße Kautschukmischung Ruß enthalten. Der Rußgehalt sollte nicht höher als der Kieselsäuregehalt sein, und der Gesamtgehalt an Füllstoffen sollte nicht höher als 90 Gewichtsteile, bezogen auf 100 Gewichtsteile Gesamtelastomere, liegen. Zusätzlich kann Ruß im Verstärkungsmittel enthalten sein.

Als übliche Zusätze kann die erfindungsgemäße Kautschukmischung aromatische und/oder naphthenische Öle, Verstärkungsmittel, Alterungsschutzmittel, Tackifier, Aktivatoren und Verarbeitungshilfsmittel enthalten. Alle diese Zusätze werden in den üblichen Mengenbereichen eingesetzt. Wenn ein Teil der Kieselsäure durch Ruß ersetzt ist, wird das Verstärkungsmittel in geringerer Menge zugesetzt. Ferner enthält die erfindungsgemäße Kautschukmischung ein Vulkanisationssystem mit Schwefel und Vulkanisationsbeschleunigern.

Die Kautschukmischung kann nach folgendem mehrstufigem Verfahren hergestellt werden. In einer ersten Stufe wird das Elastomer oder werden die Elastomere mit den üblichen Zusätzen und der Kieselsäure in einem Kneter gemischt. Die Temperatur soll dabei nicht auf Werte steigen, bei denen bereits eine Vernetzung einsetzt. Üblicherweise sollen Temperaturen von 160 bis 170°C nicht überschritten werden. Nach der Abkühlung der Mischung wird sie nochmals in einer zweiten Stufe geknetet, wobei wiederum die Temperatur nicht auf Werte steigen soll, bei denen eine Vernetzung stattfindet. In einer anschließenden dritten Stufe wird das Vulkanisationssystem auf einer Walze eingearbeitet, wobei auch hierbei Temperaturen unterhalb der Vernetzungstemperatur eingehalten werden. Die Zeiten für die Mischprozesse in den einzelnen Stufen sind jeweils so bemessen, daß eine gute Durchmischung der Bestandteile erreicht wird.

Die Erfindung wird an Hand der folgenden Beispiele näher erläutert.

Die Eigenschaften der erfindungsgemäßen Kautschukmischungen und der zu Vergleichszwecken hergestellen Kautschukmischungen wurden an aus den Mischungen jeweils hergestellten vulkanisierten Probekörpern bestimmt. Zur Bestimmung des Verlustfaktors (tan δ ) wird auf DIN 53513 verwiesen. Der Abrieb wurde nach DIN 53516 bestimmt.

Es wurden sechs Kautschukmischungen mit den in der folgenden Tabelle angegebenen Zusammensetzungen hergestellt,wobei jeweils die Gewichtsteile der Komponenten in den Mischungen angegeben sind. Die Mischungen 1 bis 3 sind erfindungsgemäße Mischungen, die Mischungen 4 bis 6 sind Vergleichsmischungen.

**Tabelle**

| KAUTSCHUKMISCHUNG | 1 | 2 | 3 | 4 | 5 | 6 |
|---|---|---|---|---|---|---|
| Bestandteile | | | | | | |
| Copolymer a | 100 | | | 100 | | |
| Copolymer b | | 100 | | | 100 | |
| Copolymer c | | | 100 | | | 100 |
| Kieselsäure VN3 | 65 | 65 | 65 | | | |
| Ruß N234 | | | | 65 | 65 | 65 |
| Verstärkungsmittel | 10,4 | 10,4 | 10,4 | | | |
| Zinkoxid | 3 | 3 | 3 | 3 | 3 | 3 |
| Stearinsäure | 2 | 2 | 2 | 2 | 2 | 2 |
| Aromatisches Öl | 16 | 16 | 16 | 16 | 16 | 16 |
| Alterungsschutzmittel | 2 | 2 | 2 | 2 | 2 | 2 |
| Tackifier | 1,5 | 1,5 | 1,5 | 1,5 | 1,5 | 1,5 |
| Vulkanisationsbeschleuniger A | 1,7 | 1,7 | 1,7 | 1,3 | 1,3 | 1,3 |
| Vulkanisationsbeschleuniger B | 1,5 | 1,5 | 1,5 | 0,3 | 0,3 | 0,3 |
| Schwefel | 1,4 | 1,4 | 1,4 | 1,7 | 1,7 | 1,7 |
| Bezugswerte zum gemessenen tan δ bei 70 °C | 140 | 144 | 149 | 100 | 105 | 107 |
| Lebensdauer unter Abrieb | 102 | 100 | 97 | 100 | 105 | 101 |

Die in der obigen Tabelle angegebenen Bestandteile werden im folgenden erläutert:

Copolymer a: Anionisch polymerisiertes Isopren-Butadien-Copolymer mit 80 Gew.-% Butadien und 20 Gew.-% Isopren, wobei die 1,2-Bindungen im Butadienanteil 52 Gew.-% und die 3,4-Bindungen im Isoprenanteil 36 Gew.-% betragen. Der komplementäre Prozentsatz im Butadien- und Isoprenanteil liegt jeweils als 1,4-Bindungen vor.

Copolymer b: Anionisch polymerisiertes Isopren-Butadien-Copolymer mit 80 Gew.-% Butadien und 20 Gew.-% Isopren, wobei die 1,2-Bindungen im Butadienanteil 38 Gew.-% und die 3,4-Bindungen im Isoprenanteil 60 Gew.-% betragen.Der komplementäre Prozentsatz im Butadien- und Isoprenanteil liegt jeweils als 1,4-Bindungen vor.

Copolymer c: Anionisch polymerisiertes Isopren-Butadien-Copolymer mit 75 Gew.-% Butadien und 25 Gew.-% Isopren, wobei die 1,2-Bindungen im Butadienanteil 40 Gew.-% und die 3,4-Bindungen im Isoprenanteil 60 Gew.-% betragen. Der komplementäre Prozentsatz im Butadien- und Isoprenanteil liegt jeweils als 1,4-Bindungen vor.

Kieselsäure VN3: BET-Oberfläche 170 m²/g, Handelsprodukt der Degussa Ultrasil^{R} VN3 Granulat.

Ruß N 234: BET-Oberfläche 125 m²/g, bestimmt nach ISO S-4652, ASTM D-3037, DIN 66132; CTAB-Oberfläche 120 m²/g, bestimmt nach ISO 6810, ASTM D-3765; DBP-Absorption 125 ml/100 g, bestimmt nach ISO S-4656, ASTM D-2414, DIN 53601.

Verstärkungsmittel: Mischung im Verhältnis 1:1 von Ruß N 330 und polysulfidischem Organosilan, Handelsprodukt der Degussa X 50-S.

Alterungsschutzmittel: Gemischte Di-aryl-p-phenylendiamine.

Tackifier: Kondensationsprodukte aus p-tert.-Octylphenol und Formaldehyd.

Vulkanisationsbeschleuniger A: CBS (N-Cyclohexyl-2-benzothiazolsulfenamid).

Vulkanisationsbeschleuniger B: DPG (N,N'-Diphenylguanidin).

Die Kautschukmischungen 1 bis 6 wurden jeweils folgendermaßen hergestellt. In einem Kneter mit einer Knetertemperierung von 50°C und einer Kneterdrehzahl von 50 pro min wurden in einer ersten Stufe die Elastomere gegeben und geknetet. Dann wurden Zinkoxid, Stearinsäure, Alterungsschutzmittel und Tackifier zugegeben und eingeknetet. Anschließend wurden jeweils die Hälfte der Kieselsäure, des Verstärkungsmittels und des aromatischen Öls im Fall der Mischungen 1 bis 3 und jeweils die Hälfte des Rußes und des aromatischen Öls im Fall der Mischungen 4 bis 6 zugegeben und eingeknetet. Schließlich wurde jeweils die zweite Hälfte der eben genannten Bestandteile zugegeben und eingeknetet. Bei dem gesamten Mischprozeß wurde eine maximale Temperatur von 160°C eingehalten.

Nach Abkühlung der Mischungen wurde in einer zweiten Stufe nochmals geknetet, wobei wiederum eine Temperatur von 160°C nicht überschritten wurde. Die zweite Stufe wurde nur bei den Kautschukmischungen 1 bis 3 durchgeführt, dagegen nicht bei den Rußmischungen. Schließlich wurde in einer dritten Stufe (bei den Mischungen 4 bis 6 die zweite Stufe) das Vulkanisationssystem aus Schwefel und Vulkanisationsbeschleunigern auf einer Walze eingemischt. Auch hierbei wurde eine Temperatur unterhalb der Vernetzungstemperatur eingehalten.

An den aus den Kautschukmischungen hergestellten Probekörpern wurden Abrieb und Verlustfaktor tan δ bestimmt. Den für die Kautschukmischung 4 gemessenen Werten wurde der Wert 100 zugeordnet, und die für die anderen Kautschukmischungen gemessenen Werte wurden jeweils als Relativwerte gegenüber dem Bezugswert 100 in der Tabelle angegeben. Werte über 100 bedeuten eine Verbesserung der Eigenschaften.

Wie den in der Tabelle angegebenen Werten zu entnehmen ist, ist die Lebensdauer unter Abrieb bei den erfindungsgemäßen Kautschukmischungen etwa vergleichbar mit der Lebensdauer unter Abrieb der entsprechenden Kautschukmischungen, die statt Kieselsäure Ruß enthalten. Dies ist nicht zu erwarten gewesen, da nach den Angaben der EP-0 501 227 A1 der Ersatz von Ruß durch Kieselsäure zu einer wesentlichen Verschlechterung der Lebensdauer unter Abrieb führt, sofern die Kautschukmischung Emulsions-SBR oder Lösungs-SBR enthält. Mit der erfindungsgemäßen Kautschukmischung wird somit eine starke Verbesserung des tan δ erreicht, der mit dem Rollwiderstand korreliert, ohne daß die Lebensdauer unter Abrieb verschlechtert wird.

## Patentansprüche

1. Mit Schwefel vulkanisierbare Kautschukmischung, die min= destens ein Elastomer, mindestens einen Füllstoff, üb= liche Zusätze sowie ein Vulkanisationssystem enthält, dadurch gekennzeichnet, daß die Kautschukmischung 30 bis 100 Gewichtsteile Isopren-Butadien-Copolymer, 0 bis 70 Gewichtsteile eines oder mehrerer weiterer Elastomere sowie 20 bis 90 Gewichtsteile Kieselsäure als Füllstoff enthält, wobei alle Gewichtsteile jeweils auf 100 Ge= wichtsteile Gesamtelastomere bezogen sind, und daß das Butadien des Copolymers einen 1,2-Bindungsgehalt von 10 bis 70 Gew.-% und das Isopren des Copolymers einen 3,4-Bindungsgehalt von 20 bis 70 Gew.-% aufweist.

2. Kautschukmischung nach Anspruch 1, dadurch gekennzeichnet, daß das Isopren-Butadien-Copolymer aus 30 bis 90 Gew.-% Butadien und dem komplementären Teil Isopren besteht.

3. Kautschukmischung nach Anspruch 2, dadurch gekennzeichnet, daß das Isopren-Butadien-Copolymer aus 60 bis 80 Gew.-% Butadien und dem komplementären Teil Isopren besteht.

4. Kautschukmischung nach einem der Ansprüche 1 bis 3, dadurch gekennzeichnet, daß sie 50 bis 100 Gewichtsteile Isopren-Butadien-Copolymer, bezogen auf 100 Gewichtsteile Gesamtelastomere, enthält.

5. Kautschukmischung nach einem der Ansprüche 1 bis 4, dadurch gekennzeichnet, daß sie als weitere Elastomere 0 bis 50 Gewichtsteile Naturkautschuk, 0 bis 50 Gewichts= teile durch Emulsionspolymerisation hergestelltes Copo= lymer aus konjugiertem Dien und vinylaromatischer Ver= bindung und/oder 0 bis 30 Gewichtsteile Polybutadien enthält, wobei alle Gewichtsteile jeweils auf 100 Ge= wichtsteile Gesamtelasomere bezogen sind.

6. Kautschukmischung nach Anspruch 5, dadurch gekennzeichnet, daß sie durch Emulsionspolymerisation hergestelltes Styrol-Butadien-Copolymer mit einer Glasübergangstempe= ratur zwischen -20°C und -70°C enthält.

7. Kautschukmischung nach einem der Ansprüche 1 bis 6, dadurch gekennzeichnet, daß die Kieselsäure eine BET-Oberfläche zwischen 150 und 250 m²/g aufweist.

8. Kautschukmischung nach einem der Ansprüche 1 bis 7, dadurch gekennzeichnet, daß sie als weiteren Füllstoff Ruß enthält, wobei der Rußanteil höchstens gleich groß ist wie der Kieselsäureanteil.

9. Kautschukmischung nach einem der Ansprüche 1 bis 8, dadurch gekennzeichnet, daß sie 50 bis 80 Gewichtsteile Kieselsäure, bezogen auf 100 Gewichtsteile Gesamtelasto= mere enthält.

10. Kautschukmischung nach einem der Ansprüche 1 bis 9, dadurch gekennzeichnet, daß das Isopren-Butadien-Copolymer eine Glasübergangstemperatur Tg von -90°C bis +20°C hat.

11. Reifenlauffläche, dadurch gekennzeichnet, daß sie eine mit Schwefel vulkanisierbare Kautschukmischung nach einem der Ansprüche 1 bis 10 enthält.

12. Reifen, dadurch gekennzeichnet, daß er eine mit Schwefel vulkanisierte Reifenlauffläche nach Anspruch 11 aufweist.

## Claims

1. Rubber mixture vulcanisable with sulphur and containing at least one elastomer, at least one filler, customary additives and also a vulcanisation system, characterised in that the rubber mixture contains 30 to 100 parts by weight of isoprene-butadiene-copolymer, 0 to 70 parts by weight of one or more further elastomers and also 20 to 90 parts by weight of silica as filler, with all parts by weight being respectively related to 100 parts by weight of total elastomers, and in that the butadiene of the copolymer has a 1,2-bond content of 10 to 70 percent by weight and the isoprene of the copolymer has a 3,4-bond content of 20 to 70 percent by weight.

2. Rubber mixture in accordance with claim 1, characterised in that the isoprene-butadiene-copolymer consists of 30 to 90 percent by weight butadiene with the complementary part being isoprene.

3. Rubber mixture in accordance with claim 2, characterised in that the isoprene-butadiene-copolymer consists of 60 to 80 percent by weight of butadiene with the complementary part being isoprene.

4. Rubber mixture in accordance with one of the claims 1 to 3, characterised in that it contains 50 to 100 parts by weight of isoprene-butadiene-copolymer related to 100 parts by weight total elastomers.

5. Rubber mixture in accordance with one of the claims 1 to 4, characterised in that it contains as further elastomers 0 to 50 parts by weight of natural rubber, 0 to 50 parts by weight of a copolymer of conjugated diene and vinyl aromatic compound manufactured by emulsion polymerisation and/or 0 to 30 parts by weight of polybutadiene, with all parts by weight being respectively related to 100 parts by weight of total elastomers.

6. Rubber mixture in accordance with claim 5, characterised in that it contains styrene-butadiene-copolymer manufactured by emulsion polymerisation and having a glass transition temperature between -20°C and -70°C.

7. Rubber mixture in accordance with one of the claims 1 to 6, characterised in that the silica has a BET surface between 150 and 250 m²/g.

8. Rubber mixture in accordance with one of the claims 1 to 7, characterised in that it contains carbon black as a further filler, with the proportion of carbon black being at least the same size as the proportion of silica.

9. Rubber mixture in accordance with one of the claims 1 to 8, characterised in that it contains 50 to 80 parts by weight of silica related to 100 parts by weight of total elastomers.

10. Rubber mixture in accordance with one of the claims 1 to 9, characterised in that the isoprene-butadiene-copolymer has a glass transition temperature Tg of -90°C to +20°C.

11. Tyre tread, characterised in that it contains a rubber mixture vulcanisable with sulphur in accordance with one of the claims 1 to 10.

12. Tyre, characterised in that it contains a tyre tread in accordance with claim 11 vulcanised with sulphur.

## Revendications

1. Mélange de caoutchoucs vulcanisable avec du soufre, qui contient au moins un élastomère, au moins une charge, des additifs habituels ainsi qu'un système de vulcanisation, caractérisé en ce que le mélange de caoutchoucs contient 30 à 100 parties en masse d'un copolymère isoprène-butadiène, 0 à 70 parties en masse d'un ou plusieurs autres élastomères ainsi que 20 à 90 parties en masse d'acide silicique comme charge, toutes les parties en masse étant rapportées dans chaque cas à 100 parties en masse d'élastomères totaux, et en ce que le butadiène du copolymère présente une teneur en liaison 1,2 de 10 à 70 % en masse et l'isoprène du copolymère présente une teneur en liaison 3,4 de 20 à 70 % en masse.

2. Mélange de caoutchoucs selon la revendication 1 caractérisé en ce que le copolymère isoprène-butadiène consiste en 30 à 90 % en masse de butadiène et en la partie complémentaire d'isoprène.

3. Mélange de caoutchoucs selon la revendication 2 caractérisé en ce que le copolymère isoprène-butadiène consiste en 60 à 80 % en masse de butadiène et en la partie complémentaire d'isoprène.

4. Mélange de caoutchoucs selon l'une des revendications 1 à 3 caractérisé en ce qu'il contient 50 à 100 parties en masse de copolymère isoprène-butadiène pour 100 parties en masse d'élastomères totaux.

5. Mélange de caoutchoucs selon l'une des revendications 1 à 4 caractérisé en ce qu'il contient comme élastomères supplémentaires 0 à 50 parties en masse de caoutchouc naturel, 0 à 50 parties en masse d'un copolymère d'un diène conjugué et d'un composé vinyl aromatique préparé par polymérisation en émulsion et/ou 0 à 30 parties en masse de polybutadiène, toutes les parties en masse étant rapportées dans chaque cas à 100 parties en masse d'élastomères totaux.

6. Mélange de caoutchouc selon la revendication 5 caractérisé en ce qu'il contient un copolymère styrène-butadiène par polymérisation en émulsion qui a une température de transition vitreuse comprise entre -20°C et -70°C.

7. Mélange de caoutchoucs selon l'une des revendications 1 à 6 caractérisé en ce que l'acide silicique présente une surface BET comprise entre 150 et 250 m²/g.

8. Mélange de caoutchoucs selon l'une des revendicatins 1 à 7 caractérisé en ce qu'il contient comme charge supplémentaire du noir de carbone, la teneur en noir de carbone étant au plus aussi haute que la teneur en acide silicique.

9. Mélange de caoutchoucs selon l'une des revendications 1 à 8 caractérisé en ce qu'il contient 50 à 80 parties en masse d'acide silicique pour 100 parties en masse d'élastomères totaux.

10. Mélange de caoutchoucs selon l'une des revendications 1 à 9 caractérisé en ce que le copolymère isoprène-butadiène a une température de transition vitreuse Tg de -90°C à +20°C.

11. Chape de pneumatique caractérisée en ce qu'elle contient un mélange de caoutchoucs vulcanisable avec le soufre selon l'une des revendications 1 à 10.

12. Pneumatique caractérisé en ce qu'il comporte une chape de pneumatique vulcanisée avec le soufre selon la revendication 11.
